# EUROPÄISCHE PATENTSCHRIFT

(11) **EP 1 741 623 B1**
(45) Veröffentlichungstag und Bekanntmachung des Hinweises auf die Patenterteilung: **16.07.2008**
(21) Anmeldenummer: 06405283.0
(22) Anmeldetag: 30.06.2006
(51) Int. Cl.: B62H 3/04, B62H 3/06

(54) **Abstellvorrichtung für Zweiräder**
Bicycle storage device
Dispositif d'entreposage de bicyclettes

(30) Priorität: 04.07.2005 CH 11212005
(43) Veröffentlichungstag der Anmeldung: 10.01.2007
(73) Patentinhaber: Rudin, Daniel, 5000 Aarau (CH)
(72) Erfinder: Rudin, Daniel, 5000 Aarau (CH)
(74) Vertreter: Schneider Feldmann AG Patent- und Markenanwälte

(56) Entgegenhaltungen:
- WO-A-96/38336
- WO-A-03/006277
- DE-U1- 8 801 618
- US-B1- 6 640 979

## Beschreibung

### Technisches Gebiet

Die Erfindung betrifft eine Abstellvorrichtung für Zweiräder, sowie eine Parkanlage für mehrere Zweiräder, nach den Oberbegriffen der unabhängigen Ansprüche.

### Stand der Technik

Abstellvorrichtungen für Zweiräder, insbesondere für Fahrräder, sind in vielen Varianten und für verschiedene Zwecke erhältlich, seien es nun Haltevorrichtungen für den Transport, für die sichere und platzsparende Aufbewahrung oder für das Parken von Fahrrädern.

Abstellvorrichtungen müssen es einem Benutzer erlauben, sein Fahrrad bequem und ohne komplizierte Manipulationen abzustellen. Bei den meisten Abstellvorrichtungen werden die Fahrräder aufrecht gehalten, wobei die Verbindung zwischen Zweirad und Abstellvorrichtung über ein Rad, den Lenker, eine Pedale oder den Rahmen erstellt wird.

Ein Beispiel für einen sehr bekannten Typus einer Abstellvorrichtung zeigt DE 93 16 618 U1. Bei diesem weist die Vorrichtung zwei parallel verlaufende Bügel auf, zwischen die das Vorderrad eines Fahrrads geschoben werden. Durch leichtes Abkippen des Fahrrads aufgrund der Schwerkraft verklemmt sich das Rad in den Bügeln. Das Fahrrad wird in einer im wesentlichen aufrechten Position gehalten. Ähnliche Vorrichtungen zeigen auch DE 296 01 759 U1 und DE 43 36 363 C1.

Ebenfalls bekannt sind im Boden versenkte Vorrichtungen mit einer nach oben gerichteten schlitzförmigen Öffnung, in die das Vorderrad eines Fahrrads gestellt werden kann, so dass dieses nach leichtem Abkippen in einer aufrechten Position gehalten wird. DE 2 320 774 A1 zeigt ein Beispiel einer solchen Vorrichtung, in Kombination mit einer obenstehend erwähnten Bügel-Vorrichtung.

DE 70850 A zeigt eine Abstellvorrichtung, bei der das Vorderrad eines Fahrrads in einer Rinne steht, und auf einer der Rinne entgegengesetzten oberen Seite von einem federkraftbeaufschlagten Halteelement form- und kraftschlüssig fixiert wird, wobei das Halteelement manuell bedient werden muss.

WO 96/22910 A1 zeigt eine Abstellvorrichtung, bei welcher beide Räder des Fahrrads sich in einer Rinne befinden, wobei das vordere Rad in einer gerundeten Vertiefung der Rinne steht, und ein Halteelement in Form einer Andrückrolle am Ende eines federkraftbeaufschlagten Hebels auf die der Vertiefung entgegengesetzte obere Seite des Vorderrades drückt.

WO 96/38336 zeigt eine Abstellvorrichtungen für Motorräder, bei denen das Vorderrad von zwei V-förmigen schwenkbaren Halteelementen an zwei Stellen des Umfangs gehalten wird. US 6,640,979 B1 die alle Merkmale des Oberbegriffs des Anspruchs 1 offenbart zeigt eine ähnliche Abstellvorrichtung, bei der das Vorderrad von drei Halteelementen gehalten wird, wobei zwei Halteelemente angewinkelt zueinander angeordnet und schwenkbar sind.

Die bekannten Abstellvorrichtungen für Zweiräder weisen gewisse Nachteile auf. Bei den vergleichsweise günstig herzustellenden Abstellvorrichtungen, die auf dem Bügelprinzip beruhen, müssen die Dimensionen der Bügel an die Grösse und Dicke der zu haltenden Räder angepasst sein. Die von den Bügeln auf das Rad einwirkenden Kräfte erstrecken sich zudem über einen begrenzten Bereich des Radumfangs, was zu unerwünschten Verformungen des Rads führen kann. Weiter kann es zu einer Beschädigung der Radspeichen kommen.

Bekannte Abstellvorrichtungen wiederum, bei denen die haltende Kraft nur auf den äusseren Radumfang, also den Reifen eines Rades, ausgeübt wird, sind aufwendig und teuer in der Herstellung.

Abstellvorrichtungen für Zweiräder werden meist im öffentlichen Raum aufgestellt, beispielsweise vor Schulen, Bahnhöfen und anderen öffentlichen Gebäuden. Abstellvorrichtungen sollten deshalb für eine Vielzahl verschiedener Fahrradtypen, beispielsweise Standardfahrräder, Kinderfahrräder, Rennräder, Mountain-Bikes, BMX-Räder, geeignet sein, ohne das die Abstellvorrichtungen zuerst mehr oder weniger aufwendig an die jeweils vorliegenden Masse wie Raddurchmesser und

Reifenbreite angepasst werden müssen.

Zudem sollten Abstellvorrichtungen einfach zu bedienen sein. Eine geringe Anzahl beweglicher Teile bedeutet eine günstigere Herstellung und eine geringere Störungsanfälligkeit. Im Anbetracht der weitverbreiteten Vandalenakte gegenüber öffentlichem Eigentum ist auch eine möglichst robuste und zerstörungssichere Bauweise von Vorteil.

### Darstellung der Erfindung

Aufgabe der Erfindung ist es, eine Vorrichtung der eingangs erwähnten Art zur Verfügung zu stellen, die es erlaubt Zweiräder, insbesondere Fahrräder, von verschiedener Grösse und mit verschiedenen Raddurchmessern und ―dicken auf einfache Weise gegen Umfallen gesichert abzustellen.

Ausserdem soll eine solche erfindungsgemässe Abstellvorrichtung kostengünstig herzustellen, vielfältig einsetzbar und möglichst robust sein. Ein abgestelltes Fahrrad soll vor Beschädigungen geschützt sein.

Diese und andere Aufgaben werden durch eine erfindungsgemässe Abstellvorrichtung gelöst, gemäss dem unabhängigen Anspruch. Weitere bevorzugte Ausführungsformen sind in den abhängigen Ansprüchen gegeben.

Das Prinzip einer erfindungsgemässen Abstellvorrichtung beruht darauf, dass ein Rad eines Zweirads, in aller Regel das Vorderrad, entlang seines äusseren Umfangs an drei oder vier Haltepunkten durch Halteelemente gehalten und dadurch das Zweirad gegen ein Umfallen gesichert wird. Die Haltepunkte sind über einen möglichst weiten Bereich des Radumfangs verteilt, so dass allenfalls auftretende Kräfte möglichst gleichmässig auf das Rad verteilt werden, um eine Verformung zu vermeiden.

Ein Halteelement ist fest angeordnet, während zwei weitere Halteelemente in einem fixen Abstand zueinander um eine Drehachse schwenkbar angeordnet sind, die sich auf einer Verbindungslinie zwischen den zwei Halteelementen befindet, so dass beim Einführen des Vorderrads in eine erfindungsgemässe Abstellvorrichtung die Halteelemente sich der jeweiligen Radgrösse ideal anpassen, angetrieben durch das Gewicht des Fahrrads. Durch eine geeignete Ausgestaltung der Halteelemente wird das Rad unabhängig von der Dicke des Radreifens zentriert.

### Kurze Beschreibung der Zeichnungen

Im Folgenden wird die erfindungsgemässe Vorrichtung anhand von Zeichnungen erläutert.
Figuren 1(a),(b),(c) zeigen schematisch den Ablauf des Einklinkens eines Rades in einer erfindungsgemässen Abstellvorrichtung.
Figur 2 zeigt schematisch die Anpassung einer erfindungsgemässen Abstellvorrichtung an drei verschiedene Raddurchmesser.
Figur 3 zeigt ein Ausführungsbeispiel einer erfindungsgemässen Abstellvorrichtung, in Seitenansicht und perspektivischer Ansicht.
Figur 4 zeigt ein weiteres Ausführungsbeispiel einer erfindungsgemässen Abstellvorrichtung, in Seitenansicht und perspektivischer Ansicht.
Figur 5 zeigt ein weiteres Ausführungsbeispiel einer erfindungsgemässen Abstellvorrichtung, in perspektivischer Ansicht.
Figur 6 zeigt ein weiteres Ausführungsbeispiel einer erfindungsgemässen Abstellvorrichtung und einem darin abgestellten Fahrrad, in Seitenansicht.
Figur 7 zeigt drei mögliche Varianten für Halteelemente für die Verwendung in einer erfindungsgemässen Abstellvorrichtung.

### Ausführung der Erfindung

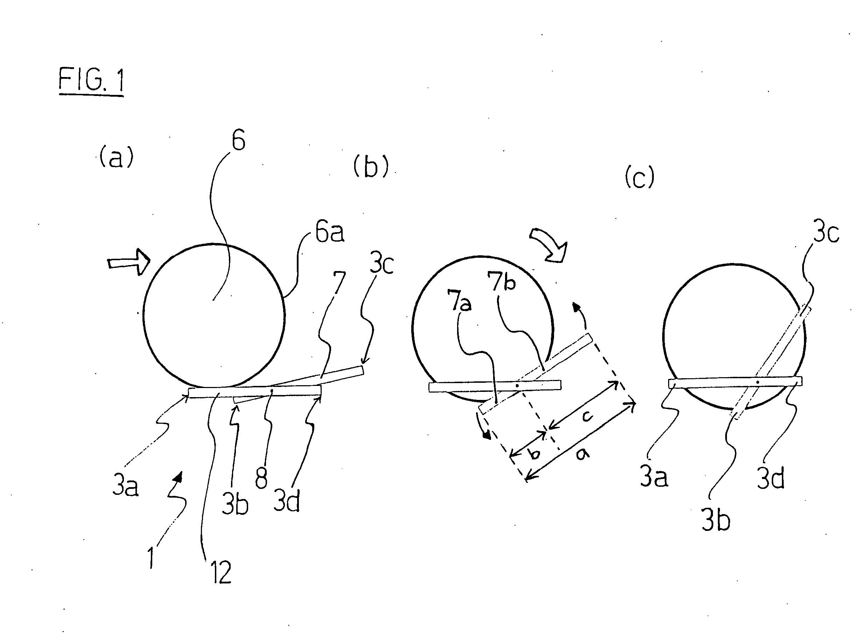

Das Prinzip einer erfindungsgemässen Abstellvorrichtung 1 wird durch die Figuren 1(a) bis (c) verdeutlicht, welche schematisch den Ablauf des Einklinkens eines Rades 6 in einer erfindungsgemässen Abstellvorrichtung 1 zeigen, in der Seitenansicht.

Figur 1 (a) zeigt ein Rad 6 eines Zweirads, vorteilhaft das Vorderrad, welches von links her über ein erstes Halteelement 3a geschoben wird. Dieses erste Halteelement 3a ist fest angeordnet, im gezeigten Beispiel am Ende eines Strebenelements 12. Noch berührt der Reifen 6a des Rades 6 nur das erste Halteelement 3a.

Am Strebenelement 12 ist ein Abstandselement 7 entlang einer Drehachse 8 drehbar gelagert. Am Abstandselement 7 wiederum sind an einem kürzeren Arm 7a ein zweites Halteelement 3b und an einem längeren Arm 7b ein drittes Halteelement 3c angebracht. Der genaue Typ der Halteelemente ist in den Figuren 1(a) bis (c) nicht gezeigt. Wichtig ist auf jeden Fall, dass der Reifen 6a des Rades 6 durch ein Halteelement zentriert wird, vorteilhaft über einen möglichst breiten Bereich verschiedener, üblicher Raddicken.

Vorteilhafterweise befindet sich in das zweite Halteelement 3b bei einer unbesetzten erfindungsgemässen Abstellvorrichtung 1 in einer ähnlichen Höhe wie das erste Halteelement 3a. Dies kann beispielsweise erreicht werden durch ein geeignetes Anbringen von Anschlagselementen. Die rücklenkende Kraft, welche das Abstandselement 7 zurück in seine in Figur 1 (a) gezeigte Leerposition bringt, kann beispielsweise durch die Gravitation oder eine geeignet angebrachte Feder erzeugt werden.

Nach dem weiteren Einführen des Rades 6 in die erfindungsgemässe Abstellvorrichtung 1 verschiebt sich das Rad 6 nach unten, in Richtung zweites Halteelement 3b, bis es dieses berührt. Diese Phase zeigt Figur 1 (b).

Durch das Gewicht des Fahrrades drückt das Rad 6 das zweite Halteelement 3b und den damit verbundenen kürzeren Arm 7a nach unten, wodurch der längere Arm 7b mit dem daran angebrachten dritten Halteelement 3c um die Drehachse 8 nach oben schwenkt, bis das dritte Halteelement 3c den Reifen 6a berührt. Die Halteposition der erfindungsgemässen Abstellvorrichtung 1 ist erreicht, wie Figur 1(c) zeigt. Das Rad 6 wird nun durch die drei Halteelemente 3a, 3b, 3c entlang seinem äusseren Umfang, dem Reifen 6a, form- und kraftschlüssig gehalten.

Die gezeigte erfindungsgemässe Abstellvorrichtung 1 kann Räder verschiedener Durchmesser aufnehmen. Bei kleinerem Durchmesser schwenkt der kürzere Arm 7a mehr nach unten aus, bis das dritte Halteelement 3c des längeren Arms 7b am Reifen 6a anschlägt. Umgekehrt schwenkt bei Rädern mit grösserem Durchmesser der kürzere Arm weniger nach unten aus bis zum Erreichen der Halteposition. Die gezeigte erfindungsgemässe Abstellvorrichtung 1 passt sich also automatisch an die jeweils vorliegende Radgrösse an.

Das Einklinken des Rades in die erfindungsgemässe Abstellvorrichtung ist neben der horizontal gerichteten Kraft des Benutzers beim Einführen des Fahrrads in die Abstellvorrichtung nur durch die Schwerkraft getrieben. Zum Entfernen der Fahrrads aus der erfindungsgemässen Abstellvorrichtung muss der Benutzer das Fahrrad nur in Richtung des ersten Halteelements 3a ziehen, wodurch das Rad 6 wieder freigegeben wird.

Figur 1 zeigt noch ein viertes Halteelement 3d, welches am Ende der Strebe 12 fest angebracht ist. Dieses zusätzliche Halteelement ist fakultativ und kann weggelassen werden, da die drei Haltepunkte der anderen Halteelemente 3a, 3b, 3c geometrisch einen Kreis eindeutig definieren. Damit jedoch bei einer erfindungsgemässen Abstellvorrichtung mit vier Halteelementen auch bei verschiedenen Radgrössen alle vier Halteelemente mit dem Reifen 6a Kontakt haben, müssen gewisse geometrische Voraussetzungen erfüllt sein. Der Abstand zwischen dem ersten 3a und dem vierten 3d Halteelement muss gleich gross sein, wie der Abstand a zwischen dem zweiten 3b und dem dritten 3c Halteelement. Der Abstand des ersten Halteelements 3a zur Drehachse 8 muss gleich gross sein wie der Abstand c des dritten Halteelements 3c zur Drehachse 8, und der Abstand des vierten Halteelements 3d zur Drehachse 8 muss gleich gross sein wie der Abstand b des zweiten Halteelements 3b zur Drehachse 8.

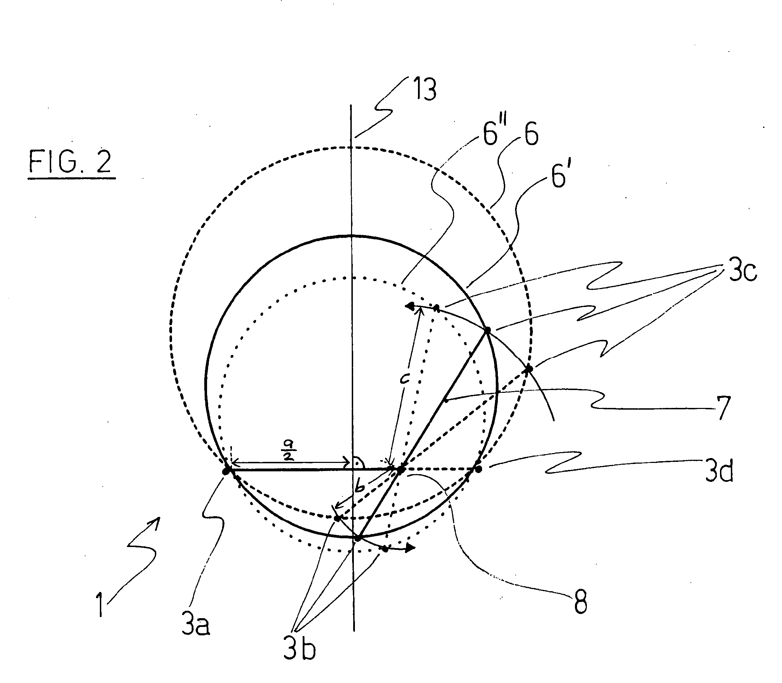

Die Anpassung einer erfindungsgemässen Abstellvorrichtung 1 an drei verschiedene Raddurchmesser wird in Figur 2 schematisch gezeigt. Drei Räder 6, 6', 6" verschiedener Grösse (dargestellt durch einen gestrichelten, ausgezogenen und punktierten Kreis) werden von einer erfindungsgemässen Abstellvorrichtung 1 festgehalten. Qualitativ gilt, dass je grösser der Raddurchmesser desto mehr schwenkt der Abstandshalter 7 aus der Leerposition. Die Position des Abstandselements 7 für die verschiedenen Raddurchmesser ist durch eine gestrichelte, ausgezogene bzw. gepunktete Linie dargestellt. Es ist klar ersichtlich, dass die erfindungsgemässe Vorrichtung sich in einer Scherenbewegung der Radgrösse anpasst.

Das vierte Halteelement 3d ist wiederum fakultativ. Der Mittelpunkt 14 eines Rades 6 in Halteposition befindet sich unabhängig vom Raddurchmesser auf einer Senkrechten 13 zur Verbindungslinie zwischen dem ersten Halteelement 3a und der Drehachse 8. Diese Senkrechte 13 schneidet die Verbindungslinie in einem Abstand a/2, der halb so gross ist, wie der Abstand a = b + c zwischen dem zweiten 3b und dem dritten 3c Halteelement.

Aus geometrischen Gründen muss der Raddurchmesser grösser sein als der Abstand a zwischen zweitem 3b und viertem 3c Halteelement, damit ein Rad von einer erfindungsgemässen Abstellvorrichtung 1 mit drei oder vier Halteelementen noch gehalten werden kann. Für ein einwandfreies Funktionieren einer erfindungsgemässen Abstellvorrichtung 1 jedoch sollte in der Halteposition das dritte Halteelement 3c nicht hinter der durch das erste Halteelement 3a und den Radmittelpunkt 14 verlaufenden Gerade auf dem Reifen 6a zu liegen kommen, da sich sonst das Rad 6 verklemmen kann, wenn als drittes Halteelement 3c keine Rolle verwendet wird. Vorteilhaft liegt deshalb der minimale Raddurchmesser bei (a² + b² - c²)^{1/2}. Bei diesem Wert kommt das dritte Halteelement 3c gerade dem ersten Halteelement 3a gegenüberliegend auf dem Rad 6 zu liegen.

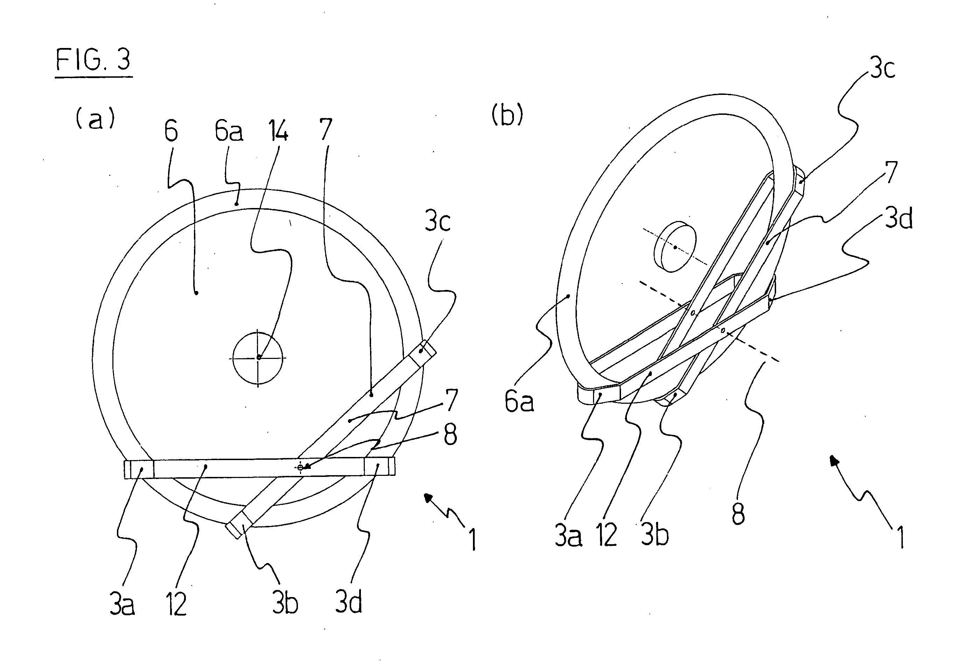

Eine mögliche Ausführungsform der erfindungsgemässen Abstellvorrichtung 1 zeigt Figur 3(a) in Seitenansicht und Figur 3(b) in perspektivischer Ansicht.

Ein Rad 6 eines Zweirades (nicht dargestellt) wird von einer erfindungsgemässen Abstellvorrichtung 1 mit vier Halteelementen 3a, 3b, 3c, 3d an vier Haltepunkten auf dem Reifen 6a gehalten. Alle vier Halteelemente 3a, 3b, 3c, 3d sind als Dreiecke mit gerundeter Spitze ausgeführt. Die dreieckige Form erlaubt eine Zentrierung eines Rades 6 in Bezug auf die durch die Halteelemente definierte Ebene, auch wenn ein Reifen breiter oder schmaler als ein Standardreifen ist. Das Abstandselement 7 und das zweite und dritte Halteelement 3b, 3c werden integral durch ein geschlossenes, langgezogenes ringförmiges Element gebildet. Dieses kann beispielsweise aus einem entsprechend umgeformten Metallstab gefertigt werden. Der Abstand zwischen den zwei Streben des Abstandselements 7 ist so gross gewählt, dass die Speichen des Rades 6 (nicht dargestellt) nicht mit den Streben in Kontakt kommen können. Dadurch wird eine Beschädigung der Speichen vermieden. Das Strebenelement 12 und das erste und vierte Halteelement 3a, 3d werden ebenfalls durch ein geschlossenes, langgezogenes ringförmiges Element gebildet. Das Abstandselement 7 ist an zwei Drehpunkten auf dem Strebenelement 12 drehbar gelagert. Figur 3 zeigt nur die dazugehörigen Bohrungen in Abstandselement 7 und Strebenelement 12. Die nötige Verbindung kann durch geeignete Mittel wie beispielsweise Nieten oder Schrauben geschaffen werden.

Im gezeigten Ausführungsbeispiel der erfindungsgemässen Abstellvorrichtung 1 ist das Abstandselement 7 innerhalb des Strebenelements 12 angebracht, dies kann jedoch auch umgekehrt sein, ohne Einfluss auf die Funktion.

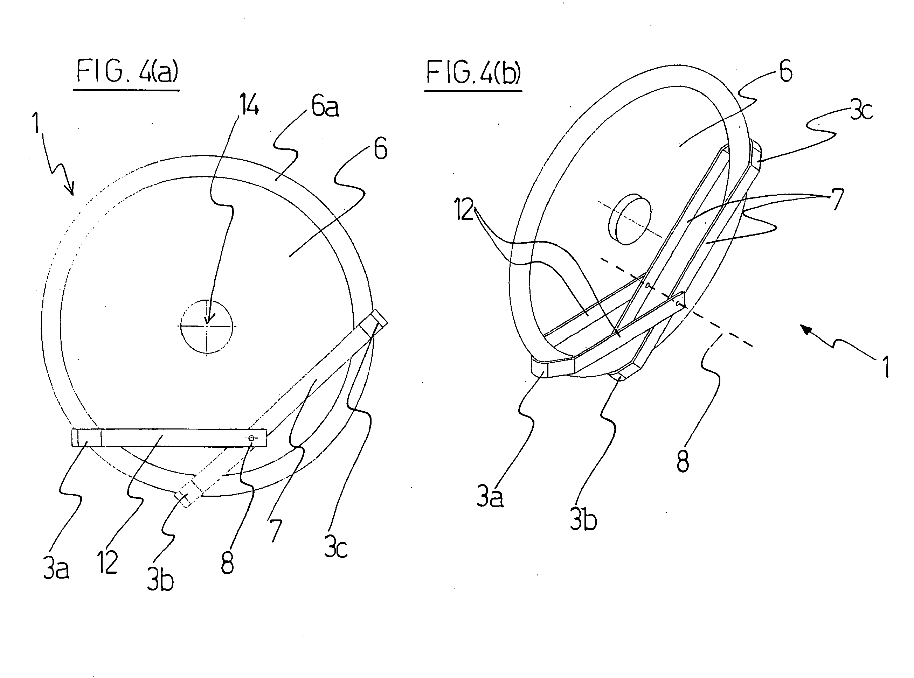

Die Figuren 4(a) und (b) zeigen eine weitere Ausgestaltungsmöglichkeit der erfindungsgemässen Abstellvorrichtung 1, in Seitenansicht und perspektivischer Ansicht. Die gezeigte erfindungsgemässe Abstellvorrichtung 1 weist kein viertes Halteelement auf. Das Strebenelement 12 ist gabelförmig ausgestaltet, wobei die Drehachse 8 durch die beiden Arme des Strebenelements 12 verläuft. Zweites 3b und drittes 3c Halteelement und Abstandselement 7 sind analog zu Figur 3 ausgeführt.

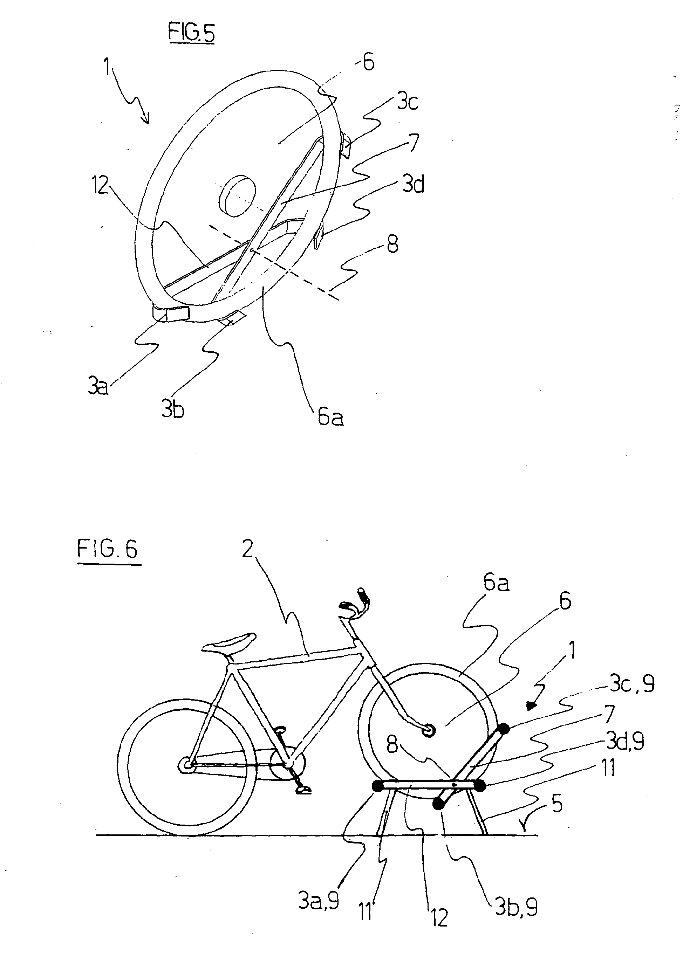

Figur 5 zeigt eine weitere Ausführungsform der erfindungsgemässen Abstellvorrichtung 1. Das Strebenelement 12 besteht aus einem Stab, an den ein erstes 3a und viertes 3d Halteelement angeformt sind. Am Strebenelement 12 ist das Abstandselement 7 angebracht, ebenfalls in Form eines Stabes mit angeformtem zweiten 3b und dritten 3c Halteelement.

Das auf einer erfindungsgemässen Abstellvorrichtung 1 lastende Gewicht des Fahrrads 2 wird durch das Strebenelement 12 getragen. Dieses kann auf vielfältige Weise abgestützt werden. Dazu können beispielsweise Trägerelemente 11 am Strebenelement 12 angebracht werden, die das Gewicht der erfindungsgemässen Abstellvorrichtung 1 aufnehmen. Diese wiederum können beispielsweise auf dem Untergrund 5, an einer Wand oder an einem geeigneten Traggestell angebracht sein. Figur 6 zeigt ein Ausführungsbeispiel einer erfindungsgemässen Abstellvorrichtung 1 und einem darin abgestellten Fahrrad 2, in Seitenansicht. Das Vorderrad 6 ist in die erfindungsgemässe Abstellvorrichtung 1 mit vier Halteelementen eingeklinkt. Die vier Halteelemente 3a, 3b, 3c, 3d sind als Rollen 9 mit Einschnürung ausgestaltet (nicht sichtbar). Trägereiemente 11 tragen das auf dem Strebenelement 12 lastende Gewicht des Fahrrads 2.

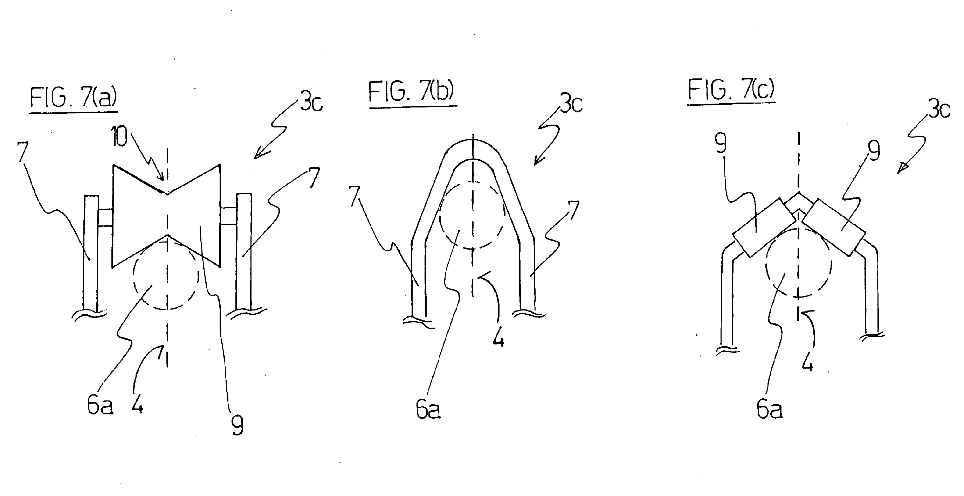

Figur 7 zeigt drei mögliche Varianten für Halteelemente für die Verwendung in einer erfindungsgemässen Abstellvorrichtung.

In Figur 7(a) ist ein Halteelement 3c als frei drehbare Rolle 9 ausgeführt, mit einer zentralen Einsschnürung 10, welche ein Rad auf die durch die drei oder vier Halteelemente definierte Ebene 4 zentriert. Eine solche Rolle 9 hat den Vorteil, dass der Reibungswiderstand des Halteelementes 3c auf dem Radreifen 6a, gestrichelt dargestellt, minimiert wird. Selbsterklärend können alle Halteelemente 3a, 3b, 3c, 3d als Rolle 9 ausgeführt werden.

Figur 7(b) zeigt eine Ausgestaltungsform eines Halteelementes 3c analog zu den Figuren 3 bis 5. Ein Stab oder eine Stange ist V-förmig zusammenlaufend geformt. Diese Formgebung führt ebenfalls dazu, dass ein Radreifen 6a auf die Ebene 4 zentriert wird.

Figur 7(c) zeigt eine weitere Ausgestaltungsform eines Halteelementes 3c, mit zwei frei drehbaren Rollen 9, welche in einem Winkel zueinander angeordnet sind.

Die besprochenen und in den Figuren gezeigten Varianten für die Ausgestaltung der Halteelemente 3a, 3b, 3c, 3d, des Strebenelements 12 und des Abstandselements 7 in einer erfindungsgemässen Abstellvorrichtung 1 können nicht nur in den gezeigten Kombinationen verwendet, sondern selbstverständlich auch anders kombiniert werden.

Für die Herstellung einer erfindungsgemässen Abstellvorrichtung geeignet sind beispielsweise robuste Materialen wie Aluminium oder Stahl, aber auch Kunststoff.

### Bezugszeichenliste

- 1: Abstellvorrichtung
- 2: Zweirad
- 3a: erstes Halteelement
- 3b: zweites Halteelement
- 3c: drittes Halteelement
- 3d: viertes Halteelement
- 4: Ebene
- 5: Untergrund
- 6, 6', 6": Rad
- 6a: Reifen
- 7: Abstandselement
- 7a: kürzerer Arm
- 7b: längerer Arm
- 8: Drehachse
- 9: Rolle
- 10: Einschnürung
- 11: Trägerelement
- 12: Strebenelement
- 13: Senkrechte
- 14: Radmittelpunkt

- a: Abstand zwischen zweitem und drittem Halteelement
- b: Abstand zwischen zweitem Halteelement und Drehachse
- c: Abstand zwischen drittem Halteelement und Drehachse

## Patentansprüche

1. Abstellvorrichtung (1) für Zweiräder (2), insbesondere für Fahrräder, die ein erstes (3a), zweites (3b) und drittes (3c) Halteelement aufweist, die in einer vorgegebenen Ebene (4) angeordnet sind;
wobei das erste Halteelement (3a) in Bezug auf die Abstellvorrichtung (1) unbeweglich angeordnet ist;
das zweite (3b) und dritte (3c) Halteelement in einem fixen Abstand (a) zueinander um eine Drehachse (8) schwenkbar sind; und
die drei Halteelemente (3a, 3b, 3c) mit einem Reifen (6a) eines Zweirads (2) in Kontakt bringbar sind; **dadurch gekennzeichnet dass** die Drehachse (8) sich auf einer Verbindungslinie zwischen dem zweiten und dritten Halteelement (3b, 3c) befindet.

2. Abstellvorrichtung nach Anspruch 1, **dadurch gekennzeichnet, dass** ein Abstand (b) zwischen dem zweiten Halteelement (3b) und der Drehachse (8) kleiner ist als ein Abstand (c) zwischen dem dritten Halteelement (3c) und der Drehachse (8).

3. Abstellvorrichtung nach Anspruch 1 oder 2, **dadurch gekennzeichnet, dass** das zweite und dritte Halteelement (3b, 3c) auf einem Abstandselement (7) angebracht sind.

4. Abstellvorrichtung nach Anspruch 3, **dadurch gekennzeichnet, dass** das erste Halteelement (3a) an einem Strebenelement (12) angebracht ist, und das Abstandselement (7) am Strebenelement (12) drehbar angebracht ist.

5. Abstellvorrichtung nach Anspruch 3 oder 4, **dadurch gekennzeichnet, dass** die Abstellvorrichtung (1) ein viertes Halteelement (3d) aufweist, welches unbeweglich angeordnet ist, und
sich das vierte Halteelement (3d) auf einer Linie mit dem ersten Halteelement (3a) und der Drehachse (8) befindet,
wobei ein Abstand zwischen dem ersten Halteelement (3a) und dem vierten Halteelement (3d) gleich gross ist wie der Abstand (a) zwischen dem zweiten (3b) und dritten (3c) Halteelement, und
ein Abstand zwischen dem ersten Halteelement (3a) und der Drehachse (8) gleich gross ist wie der Abstand (c) zwischen dem dritten Halteelement (3c) und der Drehachse (8).

6. Abstellvorrichtung nach einem der Ansprüche 3 bis 5, **dadurch gekennzeichnet, dass**
das Abstandselement (7) aus zwei Stäben besteht, und das zweite (3b) und dritte (3c) Halteelement und die zwei Stäbe des Abstandselements (7) zusammen einen langgezogenen Ring bilden.

7. Abstellvorrichtung nach Anspruch 5 oder 6, unter Rückbezug auf Anspruch 4,
**dadurch gekennzeichnet, dass**
das Strebenelement (12) aus zwei Stäben besteht, und das erste (3a) und vierte (3d) Halteelement und die zwei Stäbe des Strebenelements (12) zusammen einen langgezogenen Ring bilden.

8. Abstellvorrichtung nach einem der Ansprüche 1 bis 7, **dadurch gekennzeichnet, dass**
mindestens eines der Halteelemente eine drehbar gelagerte Rolle (9) mit Einschnürung (10) ist.

9. Abstellvorrichtung nach einem der Ansprüche 1 bis 7, **dadurch gekennzeichnet, dass**
mindestens eines der Halteelemente ein V-förmig zulaufender Stab ist.

10. Abstellvorrichtung nach einem der Ansprüche 1 bis 7, **dadurch gekennzeichnet, dass**
mindestens eines der Halteelemente aus zwei drehbaren, in einem Winkel zueinander angeordneten Rollen (9) besteht.

11. Parkanlage für mehrere Zweiräder, **dadurch gekennzeichnet, dass** sie mehrere Abstellvorrichtungen (1) für Zweiräder nach einem oder mehreren der Ansprüche 1 bis 10 beinhaltet.

12. Parkanlage nach Anspruch 11, **dadurch gekennzeichnet, dass** die Abstellvorrichtungen (1) in mindestens zwei verschiedenen Abständen von einem Untergrund (5) angeordnet sind.

13. Parkanlage nach Anspruch 11 oder 12, **dadurch gekennzeichnet, dass** die Abstellvorrichtungen (1) alternierend um 180° gedreht angeordnet sind.

## Claims

1. A parking device (1) for two-wheeled vehicles (2), in particular for bicycles, comprising a first (3a), second (3b) and third (3c) retaining element which are disposed in a predefined plane (4);
wherein the first retaining element (3a) is disposed immovably in relation to the parking device (1);
the second (3b) and the third (3c) retaining element are pivotable about a pivot axis (8) at a fixed distance (a) from one another and the three retaining elements (3a, 3b, 3c) can be brought into contact with a tyre (6a) of a two-wheeled vehicle (2), **characterised in that**
the pivot axis (8) is located on a connecting line between the second and third retaining element (3b, 3c).

2. The parking device according to claim 1, **characterised in that**
a distance (b) between the second retaining element (3b) and the pivot axis (8) is shorter than a distance (c) between the third retaining element (3c) and the pivot axis (8).

3. The parking device according to claim 1 or 2, **characterised in that**
the second and the third retaining element (3b, 3c) are attached to a spacer element (7).

4. The parking device according to claim 3, **characterised in that**
the first retaining element (3a) is attached to a strut element (12) and the spacer element (7) is rotatably attached to the strut element (12).

5. The parking device according to claim 3 or 4, **characterised in that**
**that** parking device (1) comprises a fourth retaining element (3d) which is disposed immovably and
the fourth retaining element (3d) is located on a line with the first retaining element (3a) and the pivot axis (8),
wherein a distance between the first retaining element (3a) and the fourth retaining element (3d) is the same as the distance (a) between the second (3b) and third (3c) retaining element and
a distance between the first retaining element (3a) and the pivot axis (8) is the same as the distance (c) between the third retaining element (3c) and the pivot axis (8).

6. The parking device according to one of claims 3 to 5, **characterised in that**
the spacer element (7) consists of two rods, and the second (3b) and third (3c) retaining element and the two rods of the spacer element (7) together form an elongate ring

7. The parking device according to claim 5 or 6, with reference to claim 4, **characterised in that**
the strut element (12) consists of two rods, and the first (3a) and fourth (3d) retaining element and the two rods of the strut element (12) together form an elongate ring.

8. The parking device according to one of claims 1 to 7, **characterised in that**
at least one of the retaining elements is a rotatably mounted roller (9) with a constriction (10) .

9. The parking device according to one of claims 1 to 7, **characterised in that**
at least one of the retaining elements is a V-shaped tapering rod.

10. The parking device according to one of claims 1 to 7, **characterised in that**
at least one of the retaining elements consists of two rotatable rollers (9) disposed at an angle with respect to one another.

11. A parking area for a plurality of two-wheeled vehicles, **characterised in that**
this comprises a plurality of parking devices (1) for two-wheeled vehicles according to one or more of claims 1 to 10.

12. The parking area according to claim 11, **characterised in that**
the parking devices (1) are arranged at least at two different distances from ground (5).

13. The parking area according to claim 11 or 12, **characterised in that**
the parking devices (1) are arranged so that they are turned alternately through 180°.

## Revendications

1. Système de garage (1) pour deux-roues (2), notamment pour bicyclettes, qui comporte un premier (3a), deuxième (3b) et troisième (3c) éléments de retenue qui sont disposés dans un plan prédéfini (4) ;
le premier élément de retenue (3a) étant disposé de manière à ne pas pouvoir bouger par rapport au système de garage (1) ;
les deuxième (3b) et troisième (3c) éléments de retenue pouvant pivoter l'un par rapport à l'autre à une distance (a) fixe l'un par rapport à l'autre autour d'un axe de rotation (8) et les trois éléments de retenue (3a, 3b, 3c) pouvant être amenés en contact avec un pneu (6a) d'un deux-roues (2); **caractérisé en ce que**
l'axe de rotation (8) se trouve sur une ligne de liaison entre les deuxième et troisième éléments de retenue (3b, 3c).

2. Système de garage selon la revendication 1, **caractérisé en ce que**
une distance (b) entre le deuxième élément de retenue (3b) et l'axe de rotation (8) est inférieure à une distance (c) entre le troisième élément de retenue (3c) et l'axe de rotation (8).

3. Système de garage selon la revendication 1 ou 2, **caractérisé en ce que**
les deuxième et troisième éléments de retenue (3b, 3c) sont installés sur un élément écarteur (7).

4. Système de garage selon la revendication 3, **caractérisé en ce que**
le premier élément de retenue (3a) est installé sur un élément de croisillon (12) et que l'élément écarteur (7) est disposé de manière à pouvoir pivoter sur l'élément de croisillon (12).

5. Système de garage selon la revendication 3 ou 4, **caractérisé en ce que**
le système de garage (1) comporte un quatrième élément de retenue (3d) qui. est disposé de manière à ne pas pouvoir bouger et
que le quatrième élément de retenue (3d) se trouve sur une ligne avec le premier élément de retenue (3a) et l'axe de rotation (8),
la distance entre le premier élément de retenue (3a) et le quatrième élément de retenue (3d) étant égale à la distance (a) entre le deuxième (3b) et le troisième (3c) éléments de retenue et
la distance entre le premier élément de retenue (3a) et l'axe de rotation (8) étant égale à la distance (c) entre le troisième élément de retenue (3c) et l'axe de rotation (8).

6. Système de garage selon une des revendications 3 à 5, **caractérisé en ce que**
l'élément écarteur (7) est composé de deux barres et que les deuxième (3b) et troisième (3c) éléments de retenue et les deux barres de l'élément écarteur (7) constituent ensemble un anneau étiré en longueur.

7. Système de garage selon la revendication 5 ou 6, en référence à la revendication 4, **caractérisé en ce que**
l'élément de croisillon, (12) est composé de deux barres et que les premier (3a) et quatrième (3d) éléments de retenue et les deux barres de l'élément de croisillon (12) constituent ensemble un anneau étiré en longueur.

8. Système de garage selon une des revendications 1 à 7, **caractérisé en ce que**
au moins un des éléments de retenue est un rouleau à paliers rotatifs (9) doté d'un rétrécissement (10).

9. Système de garage selon une des revendications 1 à 7, **caractérisé en ce que**
au moins un des éléments de retenue est une barre convergeant en forme de V.

10. Système de garage selon une des revendications 1 à 7, **caractérisé en ce que**
au moins un des éléments de retenue est composé de deux rouleaux rotatifs disposés en angle l'un par rapport à l'autre (9).

11. Installation de parking pour plusieurs deux-roues, **caractérisée en ce que**
elle comporte plusieurs systèmes de garage (1) pour deux-roues selon une ou plusieurs des revendications 1 à 10.

12. Installation de parking selon la revendication 11, **caractérisée en ce que**
les systèmes de parking (1) sont disposés à au moins deux distances différentes d'un soubassement (5).

13. Installation de parking selon la revendication 11 ou 12, **caractérisée en ce que**
les systèmes de parking (1) sont disposés tournés suivant une alternance de 180°.
